# EUROPEAN PATENT SPECIFICATION

(11) **EP 0 587 584 B1**
(45) Date of publication and mention of the grant of the patent: **12.06.1996**
(21) Application number: 92909233.6
(22) Date of filing: 29.04.1992
(51) Int. Cl.: F16L 59/14

(54) **A METHOD FOR ISOLATING A SPIRALLY WOUND PIPE**
VERFAHREN ZUR ISOLIERUNG EINES SPIRALFÖRMIGEN ROHRES
PROCEDE D'ISOLATION D'UN TUYAU SPIRALE

(30) Priority: 30.04.1991 FI 912100
(43) Date of publication of application: 23.03.1994
(73) Proprietor: OY KWH PIPE AB, SF-65101 Vasa (FI)
(72) Inventor: HEDE, Hans, SF-65200 Vasa (FI); BLOMQVIST, Gunnar, SF-65520 Helsingby (FI); LINDVALL, Stefan, SF-66540 Petsmo (FI)
(74) Representative: Wennborg, Göte
(86) International application number: FI9200129
(87) International publication number: WO9219899

(56) References cited:
- EP-A- 0 340 123
- DE-A- 2 010 926
- DE-C- 2 824 906
- GB-A- 1 522 455
- GB-A- 2 001 407

## Description

The present invention relates to a method for insulating a spirally wound pipe of a thermoplast hollow profile, which is joined together by extruder welding or gluing.

An advantage of a spirally wound pipe with a hollow profile is that a desired ring stiffness is achieved with a considerably lower material thickness than for a single-walled pipe. When installing in arctic areas or in areas with a periodically cold climate, insulation of the pipelines is required. According to a previously known practice, also pipelines of such spirally wound pipes are furnished with an outer insulation layer, which may be encased by an outer protective sheath. Such an arrangement is relatively curbersome and significantly increases the material consumption.

The purpose of the present invention is to eliminate this problem, which is achieved by means of a method whereby
- through each of the mainly radially directed side walls of a hollow profile on one end surface of the pipe except for the side wall on the other end of the pipe, at least one axially directed hole is made so that one or more rows of holes located in line with each other is formed through the entire pipe up to said end,
- the spirally wound pipe is maintained in a horizontal position and rotated around its longitudinal axis, until one of said row of holes is located uppermost in the pipe,
- a foaming lance is led into one of said rows of holes up to the closed side wall, after which a foaming insulating mass is dosed by turns into each segment of the spirally wound pipe as the lance is stepwise drawn back out of the hole,
- when the lance has been removed, possible further boring holes on the other end surface of the pipe, provided with at least one hole, are plugged up except for the uppermost one, which is plugged up after the foamed insulating mass penetrates out through this boring hole.

By means of this arrangement, an extremely good insulation is achieved at the same time as the ring stiffness of the pipe further improves so that the wall thickness of the hollow profile may be further decreased, which decreases the manufacturing costs. The characteristics of further embodiments of the invention are presented in the accompanying claims 2 to 10.

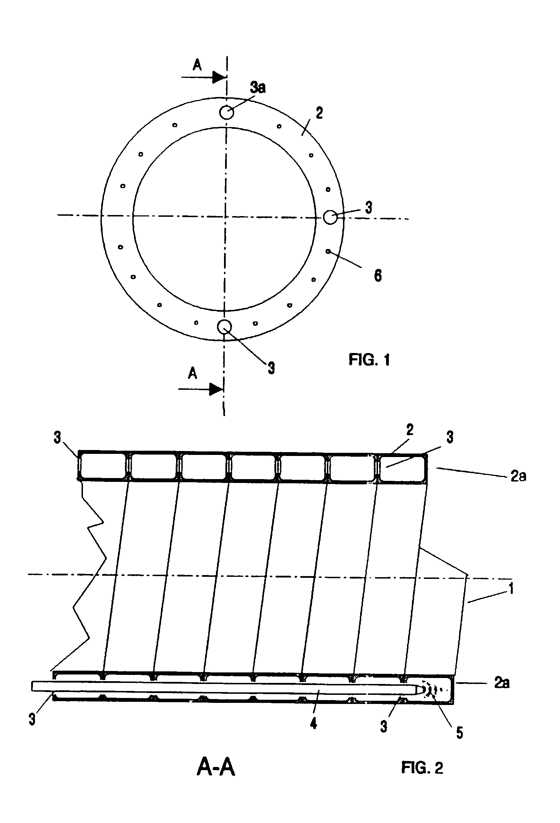

The invention is next described in more detail with reference to the accompanying drawing, in which
Fig. 1 shows an end of a spirally wound pipe, in which holes are arranged for feeding the insulating mass according to the invention, and
Fig. 2 shows a section along line A-A of Fig. 1, in which a foaming lance is introduced into a row of boring holes lowermost in the spirally wound pipe.
According to the invention, the insulation of the spirally wound pipe of a thermoplastic hollow profile 1 of a mainly rectangular cross-section is performed as follows:
   - Through each of the mainly radially directed side walls 2 of the hollow profile 1 in the spirally wound pipe, except for the side wall 2a at one end surface of the pipe, at least one radially directed hole 3, 3a is made so that a row of holes 3, 3a located in line with each other is formed through the entire pipe up to said end surface. Both end surfaces of the hollow profile are chamfered and closed in a suitable manner in this or another previous step.
   - The spirally wound pipe is maintained in a horizontal position and rotated around its longitudinal axis, until such a row of holes 3a is located uppermost in the pipe,
   - A foaming lance 4 is introduced either into said row of holes 3a or another row of holes 3, which is located on a lower level, to a hollow space, which is limited by the closed side wall 2a. The foaming insulating mass 5 is dosed through the foaming lance 4 by turns into each segment of the spirally wound pipe as the foaming lance 4 is stepwise drawn back out of the holes 3, 3a, until all segments of the spirally wound pipe are fed with a dosed amount of the insulating mass.
   - When the foaming lance 4 has been removed from the row of holes 3, 3a, all possible boring holes 3 in the spirally wound pipe's end surface provided with holes are plugged up, except for the uppermost boring hole 3a, which acts as an evacuation opening for the air, which is displaced by the foaming insulating mass 5. Not until insulating mass 5 penetrates out of the hole 3a, indicating that the entire spiral cavity in the pipe is filled with the insulating mass, the uppermost boring hole 3a is plugged up.

The boring holes 3, 3a may either be made subsequently as a new turn of the hollow profile has coincided with the spirally wound pipe or after the entire pipe is joined together.

In the first case, the equipment must be arranged to sense when the pipe, which during the joining-together process is continuously in a slow rotation, reaches a position, in which a hole 3, 3a should be made. This may be arranged in such a way that the spindle, around which the hollow profile is wound up in connection with the manufacturing of the spirally wound pipe, has stop or sensing means, which give a starting impulse to a boring or milling device each time the pipe comes in the correct working position.

In the case that the boring holes 3, 3a are made first in a later step, when the spirally wound pipe has a final length, a boring or milling tool of mainly the same length as the pipe has to be used. This places relatively great demands on both the correct adjustment of the tools and the pipe such that the desired result is obtained.

Depending on the properties of the foaming insulating mass, one or two rows of holes 3, 3a may be received. For an insulating mass of a low viscosity and a relatively long foaming time as well as good dosing properties, only one row of boring holes 3a is needed, since then the liquid insulating mass has time to run down into the bottom section of the pipe before the foaming starts.

When using a more slowly flowing and/or rapidly foaming insulating mass, two rows of boring holes 3, 3a are preferable, which are totally diagonally positioned in relation to each other, whereby the insulating mass does not have to be transferred before the foaming begins, which possibilitates the utilization of an insulating mass with a very rapid foaming. In certain cases, a bowing distance of ca. 90° between the two rows of boring holes 3, 3a may be preferable, especially if the insulating mass is lightly flowing, before a time after the foaming has started, whereby the leakage of the insulating mass through the lower boring hole 3 on the end surface of the pipe is avoided.

For avoiding air pockets, e.g. an asymmetric foam increase in the profiles, small evacuation holes 6 for air may be received in the radially directed side walls 2 of the profile. These evacuation holes 6 are preferably made uniformly distributed along the centre line of the radially directed side walls 2.

A suitable insulating mass is a polyurethane foam, which has reached a very wide use as an insulating material around the world. The foaming may be either performed directly on the product after the manufacturing of the spirally wound pipe itself or on site in connection with the installation of the pipelines.

## Claims

1. A-method for insulating a spirally wound pipe of a thermoplastic hollow profile (1), which is joined together by extruder welding or gluing, whereby
- through each of the mainly radially directed side walls (2) of a hollow profile (1) in the spirally wound pipe except for a side wall (2a) on one end surface of the pipe, at least one axially directed hole (3, 3a) is made so that one or more rows of holes located in line with each other is formed through the entire pipe up to said end,
- the spirally wound pipe is maintained in a horizontal position and rotated around its longitudinal axis, until one of said row of holes is located uppermost in the pipe,
- a foaming lance (4) is led into one of said rows of holes to the closed side wall (2a), after which a foaming insulating mass (5) is dosed by turns into each segment of the spirally wound pipe as the lance is stepwise drawn back out of the hole (3, 3a),
- when the lance (4) has been removed, possible further boring holes (3) in the other end surface of the pipe, provided with at least one hole, are plugged up except for the uppermost boring hole (3a), which is plugged up after the foamed insulating mass (5) penetrates out through this boring hole (3a).

2. A method according to Claim 1, characterized in that the boring holes (3, 3a) are made after a new turn of the hollow profile has been joined together to the spirally wound pipe.

3. A method according to Claim 1, characterized in that the boring holes (3, 3a) are made with a long bore or milled after the pipe has reached its full length.

4. A method according to any of the Claims 1-3, characterized in that two rows of holes diagonally in relation to each other are made.

5. A method according to any of the Claims 1-3, characterized in that two rows of holes at a circular distance of 90° are made.

6. A method according to any of the preceding Claims, characterized in that preferably uniformly divided evacuation holes (6) are made along the centre line in the radially directed side walls (2).

7. A method according to any of the preceding Claims, characterized in that the insulating mass (5) is a polyethylene foam.

8. A method according to Claim 4, characterized in that the foaming lance (4) is introduced into that row of holes, which is located lowermost, and that the upper row of holes is a deaeration and balancing channel.

9. A method according to any of the preceding Claims, characterized in that the foaming is performed at the factory directly after the manufacturing of the spirally wound pipe.

10. A method according to any of the Claims 1-8, characterized in that the foaming is performed in site in connection with the installation of a pipeline.

## Patentansprüche

1. Verfahren zum Isolieren eines Spiralrohres aus einem thermoplastischen hohlen Profil (1), das durch Extrusionsschweißen oder Kleben verbunden ist, bei dem
- durch jede der im wesentlichen radial gerichteten Seitenwände (2) des hohlen Profils (1) im Spiralrohr, mit Ausnahme der einen Seitenwand (2a) an der einen Endfläche des Rohres, wenigstens ein axial gerichtetes Loch (3, 3a) hindurchgehend ausgebildet wird, so daß eine oder mehrere Reihen von Löchern, die geradlinig miteinander fluchten, durch das gesamte Rohr bis zu dem erwähnten Ende durchgehend ausgebildet sind,
- das Spiralrohr in einer horizontalen Lage gehalten und um seine Längsachse gedreht wird, bis eine der erwähnten Reihen von Löchern ganz oben im Rohr angeordnet ist,
- eine Ausschäumungslanze (4) in eine der Reihen von Löchern zur geschlossenen Seitenwand (2a) eingeführt wird, wonach eine Ausschäumungsisoliermasse (5) der Reihe nach in jedes Segment des Spiralrohres dosiert wird, während die Lanze schrittweise aus dem Loch (3, 3a) herausgezogen wird,
- wenn die Lanze (4) entfernt worden ist, mögliche weitere Bohrlöcher (3) in der oberen Endfläche des Rohres, die mit wenigstens einem Loch versehen ist, verstopft werden, mit Ausnahme des obersten Bohrloches (3a), das verstopft wird, nachdem die Ausschäumungsisoliermasse (5) aus diesem Bohrloch (3a) austritt.

2. Verfahren nach Anspruch 1, dadurch gekennzeichnet, daß die Bohrlöcher (3, 3a) ausgebildet werden, nachdem eine neue Windung des hohlen Profils mit dem Spiralrohr verbunden worden ist.

3. Verfahren nach Anspruch 1, dadurch gekennzeichnet, daß die Bohrlöcher (3, 3a) mit einer langen Bohrung versehen oder ausgefräst werden, nachdem das Rohr seine volle länge erreicht hat.

4. Verfahren nach einem der Ansprüche 1 bis 3, dadurch gekennzeichnet, daß zwei Reihen von Löchern einander diagonal gegenüberliegend ausgebildet werden.

5. Verfahren nach einem der Ansprüche 1 bis 3, dadurch gekennzeichnet, daß zwei Reihen von Löchern in einem zirkularen Abstand von 90° ausgebildet werden.

6. Verfahren nach einem der vorstehenden Ansprüche, dadurch gekennzeichnet, daß vorzugsweise gleichförmig verteilte Entlüftungslöcher (6) längs der Mittellinie in den radial gerichteten Seitenwänden (2) ausgebildet werden.

7. Verfahren nach einem der vorstehenden Ansprüche, dadurch gekennzeichnet, daß die Isoliermasse (5) ein Polyethylen-Schaum ist.

8. Verfahren nach Anspruch 4, dadurch gekennzeichnet, daß die Ausschäumungslanze (4) in diejenige Reihe von Löchern eingeführt wird, die am weitesten unten liegt, und daß die obere Reihe von Löchern ein Entlüftungs- und Ausgleichkanal ist.

9. Verfahren nach einem der vorstehenden Ansprüche, dadurch gekennzeichnet, daß das Ausschäumen in der Fabrik unmittelbar nach der Herstellung des Spiralrohres ausgeführt wird.

10. Verfahren nach einem der Ansprüche 1 bis 8, dadurch gekennzeichnet, daß das Ausschäumen am Installationsort einer Rohrleitung ausgeführt wird.

## Revendications

1. Procédé d'isolation d'un tuyau en spirale d'un profil creux thermoplastique (1) qui est raccordé par soudage par extrusion ou collage, de sorte que :
- à travers chacune des parois latérales dirigées principalement radialement (2) d'un profil creux (1) dans le tuyau en spirale, à l'exception d'une paroi latérale (2a) sur une surface d'extrémité du tuyau, au moins un trou dirigé axialement (3, 3a) soit percé de manière qu'une ou plusieurs rangées de trous alignées soient formées à travers tout le tuyau jusqu'à ladite extrémité,
- le tuyau en spirale soit maintenu dans une position horizontale et tourné sur son axe longitudinal jusqu'à ce qu'une desdites rangées de trous se trouve tout en haut du tuyau,
- une lance à mousse (4) soit introduite dans une desdites rangées de trous jusqu'à la paroi latérale fermée (2a), puis une masse moussante d'isolation (5) soit dosée par spires dans chaque segment du tuyau en spirale tandis que la lance est progressivement extraite des trous (3, 3a) en étant tirée vers l'arrière,
- lorsque la lance (4) a été extraite, les éventuels autres trous (3) dans l'autre surface d'extrémité du tuyau, dotée d'au moins un trou, soient bouchés à l'exception du trou (3a) tout en haut du tuyau, bouché une fois que la masse d'isolation transformée en mousse (5) sort par ce trou (3a).

2. Procédé selon la revendication 1, caractérisé en ce que les trous (3, 3a) sont percés une fois qu'une nouvelle spire du profil creux a été raccordée au tuyau en spirale.

3. Procédé selon la revendication 1, caractérisé en ce que les trous (3, 3a) sont percés au moyen d'un long outil à aléser ou fraiser une fois que le tuyau a toute sa longueur.

4. Procédé selon l'une quelconque des revendications 1 à 3, caractérisé en ce que deux rangées de trous sont percées en diagonale.

5. Procédé selon l'une quelconque des revendications 1 à 3, caractérisé en ce que deux rangées de trous sont percées à une distance circulaire de 90°.

6. Procédé selon l'une quelconque des revendications précédentes, caractérisé en ce que des trous d'évacuation d'air (6), de préférence répartis régulièrement, sont percés le long de la ligne médiane dans les parois latérales dirigées radialement (2).

7. Procédé selon l'une quelconque des revendications précédentes, caractérisé en ce que la masse d'isolation (5) est une mousse de polyéthylène.

8. Procédé selon la revendication 4, caractérisé en ce que la lance à mousse (4) est introduite dans la rangée de trous la plus basse, et en ce que la rangée supérieure de trous est un canal de désaération et d'équilibrage.

9. Procédé selon l'une quelconque des revendications précédentes, caractérisé en ce que la transformation en mousse est effectuée à l'usine directement après la fabrication du tuyau en spirale.

10. Procédé selon l'une quelconque des revendications 1 à 8, caractérisé en ce que la transformation en mousse est effectuée sur le terrain lors de l'installation d'une conduite.
